# EUROPEAN PATENT APPLICATION

(11) **EP 0 614 027 A1**
(43) Date of publication of application: **07.09.1994**
(21) Application number: 94301164.3
(22) Date of filing: 18.02.1994
(51) Int. Cl.: F16F 9/44, F16F 9/19

(54) **Hydraulic speed controller**

(30) Priority: 01.03.1993 GB 9304102
(71) Applicant: DESOUTTER, LIMITED, Colindale London NW9 6ND (GB)
(72) Inventor: Dudden, Christopher John, Bournemouth, Dorset BH5 2DU (GB)
(74) Representative: Godwin, Edgar James

(57) **Abstract**

A hollow cylindrical plunger (4) has an open proximal end slidably fitted in a hollow cylindrical casing (1). A piston (7) in the casing (1) has a head (11) slidably fitted in the plunger (4) and carried by the free end of a rod (8) having its other end fixed to the casing (1). The hollow plunger (4) itself constitutes part of the hydraulic fluid reservoir.

## Description

This invention relates to hydraulic linear speed controllers, also known as hydraulic check units, for regulating the speed or feed rate of any moving device.

A hydraulic check is an elongate unit comprising two telescopic parts which, in use, are kinematically connected to two relatively movable bodies which are to be moved by a powered device, e.g. a pneumatic piston. As the length of the unit decreases, hydraulic fluid is transferred between chambers of variable volume through a restrictor which limits the rate of flow and therefore limits the speed of relative movement of the two bodies. This full power can be applied to the powered device or piston, without the risk of an excessive feed rate.

In one well-known hydraulic check unit, a piston rod extends from one end of a casing. The stroke length of the check is very short in relation to the overall length (e.g. a ratio of 76 mm/ 350 mm).

What is desired is a hydraulic check unit which is of smaller overall length, for the same stroke length.

The present invention provides a hydraulic linear speed controller comprising: a hollow cylindrical casing open at one end and closed at the other end; a hollow cylindrical plunger which is coaxial with the casing, the plunger having an open proximal end which is slidably fitted in the casing and a closed distal end which projects from the open end of the casing; and a piston which is coaxial with the casing, the piston having a head which is slidably fitted in the plunger and a rod having a free end which carries the head and a fixed end which is connected to the casing.

Passage means communicate between the interior of the plunger beyond the piston and the interior of the casing, via the piston, in a preferred embodiment, the passage means including restricting means for limiting the rate of flow of hydraulic fluid through the passage means as the plunger is pushed into the casing.

Since the hollow plunger itself constitutes part of the hydraulic fluid reservoir, the overall length of the controller can be reduced in comparison with a controller having a solid piston as a plunger, without any substantial increase in the diameter of the casing.

In a preferred embodiment, a rolling seal surrounds the piston rod in the casing. One end of the rolling seal is sealingly connected to the proximal end of the plunger and the other end is sealingly connected to the fixed end of the piston rod so as to delimit an inner region communicating with the interior of the plunger and an outer region isolated from the hydraulic fluid.

The casing may be provided with at least one port for supplying and exhausting a return control medium to and from the said outer region, for controlling the axial movement of the plunger.

Preferably, the passage means includes a bore extending along the piston rod and the restricting means is preferably at the fixed end of the rod. Means are preferably provided for adjusting the restriction provided by the restricting means; the adjusting means may include an adjusting element accessible outside the casing (on the end or side). Means may be provided for overriding or bypassing the restricting means, e.g. to allow rapid depression of the plunger over part of its stroke length.

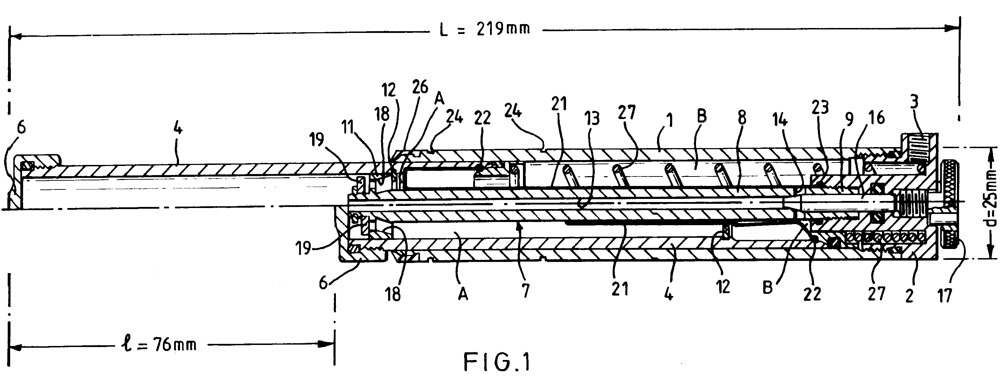

The invention will be described further, by way of example only, with reference to the accompanying drawing, in which Figure 1 is an axial section through a hydraulic linear speed controller, the part above the axis showing the controller at its maximum length, and the part below the axis showing the controller at its minimum length.

The controller illustrated has a hollow cylindrical casing 1 which is closed at one end by a screw-threaded plug 2 having a lateral inlet port 3. A hollow cylindrical plunger 4 extends coaxially from the casing 1 and its distal end is closed by a screw-threaded cap 6.

A fixed piston 7 extends coaxially along the casing 1. The piston rod 8 has one end 9 screwed into the plug 2 and its free end carries a head 11 slidably fitted in the plunger 4. The stroke length 1 of the plunger 4 is delimited by abutment between the head 11 and a stop ring 12 fixed inside the plunger 4 and by abutment between the cap 6 and the free end of the rod 8. An axial bore 13 in the piston 7 communicates between the interior of the plunger 4 and a transverse bore 14 opening at the periphery of the rod 8 near the plug 2. At the junction between the bores 13,14 a restrictor in the form of a needle valve 16 (by way of example only) is provided. The needle valve 16 is screwthreadedly engaged with the plug 2 and has a knurled knob 17 allowing adjustment of the restriction. The piston head 11 has one or more through-bores 18 with a non-return valve constituted by a flap valve 19, by way of example only.

When the plunger 4 is fully extended (upper part of Figure 1) it is full of hydraulic fluid. A rolling seal 21 has its one end 22 sealingly fixed to the proximal end of the plunger 4 and its other end 23 sealingly fixed between the rod 8 and the plug 2. The rolling seal 21 divides the interior of the casing 1 into an inner region A communicating with the interior of the plunger 4 (via the bores 13,14 and via the bores 18) and an outer region B isolated from the hydraulic fluid and communicating with the port 3.

The casing 1 is attached (using one or more grooves 24) to an air powered tool (by way of example, not shown) which rotates a tool bit while feeding it axially. The plunger 4 is kinematically connected to a part of the tool which moves with the axial feed of the tool bit. As the tool bit advances, the plunger 4 is pushed into the casing 1 (by the moving part of the tool) at a speed which is limited by the rate of flow of hydraulic fluid from the plunger 4 past the needle valve 16 in the bores 13, 14. A wiper seal 26 on the open end of the casing 1 prevents ingress of debris and cutting fluid into the casing.

A weak coil spring 27 returns the plunger 4 to the extended position, while the hydraulic fluid flows from the region A back to the interior of the plunger through the bores 18 in the head 11 of the piston. The plunger 4 can be stopped at any intermediate position by preventing flow through the port 3, thereby sealing off the region B (containing air or another fluid medium). Return of the plunger may be enhanced or caused by supplying pressure to the port 3, in which case the spring 27 may be omitted.

By way of example, the stroke length 1 is 76 mm, the overall length L is 219 mm, and the casing diameter d is 25 mm.

Various modifications may be made within the scope of the invention. For example, a device (not shown) may be provided for temporarily overriding or bypassing the needle valve 16, e.g. by slidably shifting the needle valve longitudinally or by opening a duct (not shown) providing communication between the bores 13,14 and passing through the needle valve.

## Claims

1. A hydraulic linear speed controller comprising: a hollow cylindrical casing (1) open at one end and closed at the other end; a hollow cylindrical plunger (4) which is coaxial with the casing (1), the plunger (4) having an open proximal end which is slidably fitted in the casing (1) and a closed distal end which projects from the open end of the casing (1); and a piston (7) which is coaxial with the casing (1), the piston (7) having a head (11) which is slidably fitted in the plunger (4) and a rod (8) having a free end which carries the head (11) and a fixed end which is connected to the casing (1).

2. A hydraulic linear speed controller as claimed in claim 1, including a rolling seal (21) surrounding the piston rod (8) in the casing (1), one end (22) of the rolling seal (21) being sealingly connected to the proximal end of the plunger (4) and the other end (23) being sealingly connected to the fixed end of the piston rod (8) so as to delimit an inner region (A) communicating with the interior of the plunger (4) and an outer region (6) isolated from hydraulic fluid.

3. A hydraulic linear speed controller as claimed in claim 2, in which the casing (1) has at least one port (3) for supplying and exhausting a return control medium to and from the said outer region (B).

4. A hydraulic linear speed controller as claimed in any preceding claim, in which passage means (13,14) communicate between the interior of the plunger (4) beyond the piston (7) and the interior of the casing (1), via the piston (7), the passage means (13,14) including restricting means (16) for limiting the rate of flow of hydraulic fluid through the passage means (13,14) as the plunger (4) is pushed into the casing (1).

5. A hydraulic linear speed controller as claimed in claim 4, in which the passage means (13,14) includes a bore (13) extending along the piston rod (8).

6. A hydraulic linear speed controller as claimed in claim 5, in which the restricting means (16) is at the fixed end of the rod (8).

7. A hydraulic linear speed controller as claimed in any of claims 4 to 6, including adjusting means (17) for adjusting the restriction provided by the restricting means (16).

8. A hydraulic linear speed controller as claimed in claim 7, in which the adjusting means includes an adjusting element (17) accessible outside the casing (1).

9. A hydraulic linear speed controller as claimed in any of claims 4 to 8, including means for overriding or bypassing the restricting means (16).
